(19) Europäisches Patentamt
European Patent Office
Office européen des brevets

(11) Veröffentlichungsnummer : **0 027 577**
**B1**

(12) # EUROPÄISCHE PATENTSCHRIFT

(45) Veröffentlichungstag der Patentschrift : **22.06.83**

(51) Int. Cl.³ : **C 07 F 3/02**, C 07 C 29/68, C 07 C 31/28

(21) Anmeldenummer : **80105941.1**

(22) Anmeldetag : **01.10.80**

(54) **Organomagnesiumalkoxide, Verfahren zu ihrer Herstellung und stabile Lösungen dieser Verbindungen.**

(30) Priorität : **10.10.79 DE 2941048**

(43) Veröffentlichungstag der Anmeldung : **29.04.81 Patentblatt 81/17**

(45) Bekanntmachung des Hinweises auf die Patenterteilung : **22.06.83 Patentblatt 83/25**

(84) Benannte Vertragsstaaten : **BE DE FR GB IT NL**

(56) Entgegenhaltungen :
**DE A 2 112 644**
**DE B 1 194 416**
**US A 3 423 446**

(73) Patentinhaber : **SCHERING AKTIENGESELLSCHAFT**
**Berlin und Bergkamen**
**Waldstrasse 14 Postfach 1540**
**D-4619 Bergkamen (DE)**

(72) Erfinder : **Müller, Karl Heinz, Dr. Dipl.-Chem.**
**Grevinghof 55**
**D-4712 Werne (DE)**
Erfinder : **Schröer, Ulrich, Dr. Dipl.-Chem.**
**Meckeweg 4**
**D-4618 Kamen-Methler (DE)**

**EP 0 027 577 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Organomagnesiumalkoxide, Verfahren zu ihrer Herstellung und stabile Lösungen dieser Verbindungen

Alkylmagnesiumalkoxide sind ein bekannter Verbindungstyp. Zu ihrer Herstellung sind verschiedene Wege bekannt, die jedoch alle mit Nachteilen behaftet sind.

Eine kurze Übersicht gibt Houben-Weyl Bd. XIII/2a. So wird für die Reaktion zwischen Magnesium, Alkylhalogenid und Alkohol ein zusätzliches Molekül Alkylhalogenid aufgewandt, um als Alkan verworfen zu werden :

$$2\ RCl + 2\ Mg + R'OH \longrightarrow R\text{-}Mg\text{-}OR' + MgCl_2 + RH$$

Die erhaltenen Verbindungen sind assoziiert und teilweise untersucht (J. Amer. Chem. Soc. 97 (1975) 3 162 ; Rec. of Chem. Progr. 28 (1967) 3). Der Einfachheit halber sind sie hier und im folgenden als Monomere dargestellt.

Ausgehend von ätherischen Grignardlösungen wird immer zunächst Äther eingeführt, der die Weiterverwendung erheblich stören kann und dessen Entfernung eine aufwendige Arbeitsoperation darstellt (Rec. of. Chem. Prog. 28 (1967) S. 21).

So führt die Umsetzung von Grignardverbindungen mit Alkalialkoholaten außer dem unerwünschten Äther noch ein Fremdmetall ein, das erst wieder vollständig entfernt werden muß.

$$RX + Mg + NaOR' \longrightarrow R\text{-}Mg\text{-}OR' + NaX$$

Die dabei anfallenden Niederschläge schließen oft erhebliche Produktmengen ein, was zu Ausbeuteminderungen führt ; die Endprodukte enthalten trotzdem nicht unerhebliche Mengen des Fremdmetalls.

Wird zuerst das Alkoholat hergestellt, um das überschüssige Alkylhalogenid einzusparen, so muß dieses, da in fast allen Lösungsmitteln schwer oder nicht löslich, in stark verdünnten Suspensionen gehandhabt werden. Bei den in dieser Suspension durchgeführten Umsetzungen von weiterem Magnesium mit Alkylhalogenid stören die Nebenreaktionen gemäß :

$$2\ RX + Mg\ (OR')_2 \longrightarrow 2\ ROR' + MgX_2$$

(Chem. Ber. 44 (1911) 2 847) sowie die im Magnesiumchlorid festgehaltenen Alkyl- und Alkoxymagnesiumanteile. Beide Phänomene führen zu erheblichen Ausbeuteverlusten.

Drei weitere Methoden zerstören zunächst mühsam aufgebaute Alkylmagnesiumbindungen und sind in ihren Nachteilen der an erster Stelle genannten Methode vergleichbar :

1. Umsetzung von 2 Mol Grignard oder 1 Mol Dialkylmagnesium mit 1 Mol Alkohol (J. Chem. Soc. (1964) 2 484 ; J. Chem. Soc. (A) (1968) 1 118).

2. Addition von Alkylmagnesiumbindungen an Carbonylverbindungen oder Epoxide (J. Org. Chem. 28 (1963) 348 ; Makromol. Chem. 103 (1967) 164).

3. Partielle Oxidation von Dialkylmagnesiumverbindungen (Bl. Soc. chim. Belg. 74 (1965) 71).

Es wurde angedeutet, daß ätherische Alkylmagnesiumalkoxidlösungen (J. Org. Chem. 28 (1963) 204 ; J. Org. Chem. 28 (1963) 355) an einem Gleichgewicht vom Schlenktyp beteiligt sein können :

$$2\ RMgOR' \rightleftharpoons MgR_2 + Mg(OR')_2$$

Es zeigte sich jedoch, daß die vermeintlich aus Dialkyl- und Dialkoxymagnesium so entstandenen Alkylmagnesiumalkoxide tatsächlich aus einem Gemisch von Dialkyl- und Dialkoxymagnesium bestanden.

Gemäß US-PS 4 133 824 werden Komplexe der Formel $(R_2Mg)_n[(RO)_2Mg]_n$ erhalten, indem man Magnesium mit einem Organohalogenid der Formel RX umsetzt und während oder nach der Reaktion Magnesiumalkoxid zu den Reaktionsprodukten gibt. So wird gemäß Beispiel 2 das gesamte Produktgemisch der Grignard-Reaktion aus Beispiel 1 mit Magnesiumäthoxid zu Butylmagnesiumäthoxid mit 29 %iger Ausbeute umgesetzt.

Es wurde nun gefunden, daß man Organomagnesiumalkoxide in einem sehr einfachen Verfahren mit hohen Ausbeuten herstellen kann, wenn man in Kohlenwasserstoffen lösliche Magnesiumdialkyle mit Magnesiumdialkoxiden im Molverhältnis 1 : 1 umsetzt.

Gegenstand der Erfindung ist daher ein Verfahren zur Herstellung von in Kohlenwasserstoffen löslichen Organomagnesiumalkoxiden der Formel

$$R_a^1 R_b^2\ Mg(OR^3)_c(OR^4)_d \qquad (I)$$

in der $R^1$, $R^2$, $R^3$ und $R^4$ gleiche oder verschiedene Alkylreste bedeuten und $R^1$ und $R^2$ unabhängig voneinander auch einen Aryl- oder Aralkylrest bedeuten können, mit der Maßgabe, daß $R^3$ und $R^4$ nicht gleichzeitig Methyl sein dürfen, wobei (a und b) sowie (c und d) gleich 1 ist und wobei a, b, c und d ganzzahlige und gebrochene Werte annehmen können, das dadurch gekennzeichnet ist, daß man

lösliche Dialkylmagnesiumverbindungen der Formel

$$(R_a^1R_b^2)_2\ Mg \qquad (II)$$

mit Verbindungen der Formel

$$Mg[(OR^3)_c(OR^4)_d]_2 \qquad (III)$$

bei Temperaturen von 50 bis 160 °C umsetzt.

Vorzugsweise wird die Umsetzung bei 80 °C bis 120 °C durchgeführt.

Ein weiterer Gegenstand sind die nach diesem Verfahren erhältlichen Verbindungen der allgemeinen Formel

$$R_a^1R_b^2\ Mg(OR^3)_c(OR^4)_d \qquad (I)$$

in der $R^1$ Butyl und $R^2$ Octyl bedeutet und $R^3$, $R^4$, a, b, c und d die obengenannte Bedeutung haben, insbesondere solche mit einem Butyl-Octyl-Verhältnis von 3 : 1.

Bevorzugt sind solche Verbindungen, bei denen $R^3$ und $R^4$ Äthyl- und/oder i-Propyl bedeuten, insbesondere die Verbindung $Bu_{0,75}Oc_{0,25}Mg(OEt)_{0,8}(OiPr)_{0,2}$.

Gegenstand der Erfindung sind ferner stabile Lösungen der genannten Verbindungen in inerten Kohlenwasserstoffen.

Es können in sehr hohen, meist quantitativen Ausbeuten genau definierte Alkylmagnesiumalkoxide hergestellt werden oder deren Lösungen in inerten organischen Lösungsmitteln. Es ist ferner möglich, mit überschüssigen Mengen an Dialkyl- oder -arylmagnesium umzusetzen, wenn dieser Überschuß im Endprodukt gewünscht wird.

Die Einzelkomponenten werden im gewünschten Verhältnis gemischt und es ergibt sich nach kurzer Reaktionszeit bei Temperaturen von 50 bis 160 °C, vorzugsweise 80 bis 120 °C, das gewünschte Endprodukt.

Diorganomagnesiumverbindungen und Magnesiumdialkoholate sind handelsübliche Verbindungen, die als solche eingesetzt werden können. Geeignete, in Kohlenwasserstoffen lösliche Dialkylmagnesium-Verbindungen sind beispielsweise solche mit verzweigten Alkylresten, wie Di-sec.-butylmagnesium oder Butyl-sec.-butylmagnesium. Weiterhin können Dialkylmagnesium-Verbindungen eingesetzt werden, die Äther oder andere Komplexbildner wie Aluminiumalkyle zu 1-10 Mol.-% enthalten.

Derartige Magnesiumdialkyle können beispielsweise gemäß US-PS 3 755 478, DE-PS 2 027 327 oder GB-PS 955 806 hergestellt werden.

Die Ausgangsverbindungen können als Einzelverbindungen, als Gemische der Einzelverbindungen oder als gemischte Diorganomagnesiumverbindungen eingesetzt werden.

Die an sich festen und kaum in Lösung zu bringenden Magnesiumdialkoxide lösen sich rasch auf, wobei bei äußerst reinen Ausgangsverbindungen kein Rückstand verbleibt. Bei erfindungsgemäßer Umsetzung mit Diorganomagnesiumlösungen ergeben sich klare Lösungen der Endprodukte, die niedrigviskos und in stark konzentrierten Lösungen oder bei höheren Anteilen an am $\alpha$-C-Atom verzweigten Alkoxidgruppen sogar konzentriert in flüssiger Form gehandhabt werden können.

Die erfindungsgemäß hergestellten Produkte — auch die niederkettigen — sind löslich in inerten, polaren und unpolaren Lösungsmitteln.

Es ergeben sich damit große Vorteile in der Handhabung und beim Transport gegenüber Magnesiumdialkoxiden und -alkylen.

Neben der Verwendung als Alkylierungsmittel können die erfindungsgemäß hergestellten Verbindungen als Katalysatoren bzw. Katalysatorkomponente für die Polymerisation genutzt werden.

Derartige Katalysatoren sind beispielsweise geeignet für die Polymerisation von Vinyl- und Allylverbindungen, Lactonen, Lactamen, $\alpha$-Olefinen, besonders Äthylen und Propylen, Dienen, besonders Butadien und Isopren, Epoxiden, Aldehyden, Pyrrolderivaten u. a.

Je nach der Art und Menge der zusätzlichen Katalysatorkomponenten können Katalysatoren mit hoher Stereospezifität und Wirksamkeit hergestellt werden, z. B. mit Titan-Verbindungen solche vom Ziegler-Typ.

## Beispiel 1

112,1 g einer Lösung von $Bu_{1,5}Oc_{0,5}Mg$ in einem Isononangemisch mit einem Magnesiumgehalt von 2,94 Gewichtsprozent — entsprechend 0,136 Mol Dialkylmagnesium, einem Isopropylatgehalt von 0,14 Gew.-% und einem Al-Gehalt von 0,08 Gew.-% — wurden vorgelegt und unter Rührung 19,35 g festes Magnesiumisopropylat einrieseln gelassen. Es wurde 1 Stunde auf 120 °C erhitzt, wobei das Magnesiumisopropylat vollständig in Lösung ging.

Die bräunliche Lösung wurde vom Lösungsmittel befreit. Es hinterblieb ein Öl in einer Ausbeute von 42 g, entsprechend 100 % d. Th.

Mg-Gehalt : 15,60 Gew.-% (theor. 15,75 %)

Mg-O-Gehalt: 7,83 Gew.-% (theor. 7,88 %)
Al-Gehalt: 0,19 Gew.-%.

Das Öl hatte eine Viskosität von 89 cSt bei 20 °C, die Dichte betrug 0,92 g $cm^{-3}$ bei 24 °C, das Öl löste sich in allen gebräuchlichen inerten Lösungsmitteln.

Beispiel 2

214,6 g einer 18,67 %igen Lösung von $Bu_{1,5}Oc_{0,5}Mg$ in iso-Nonan (0,241 Mol $R_2Mg$) und einem Diäthyläthergehalt von weniger als 0,003 Gew.-% wurden mit 27,5 g Mg-äthylat (0,241 Mol) versetzt und 1 Stunde auf Siedetemperatur gehalten. Eine geringe Menge eines schwarzgrauen Niederschlags wurde abzentrifugiert. Der Niederschlag wurde mit 20 ml iso-Nonan gewaschen und erneut zentrifugiert. Die vereinigten Zentrifugate hatten bei 20 °C eine Viskosität von 1,87 cSt.

Der Mg-Gehalt der Lösung betrug 4,56 Gew.-% (= theor. Wert); der Mg-O-Gehalt betrug 2,19 (theor. 2,28) Gew.-%. Der Niederschlag wog weniger als 1 g. Diäthyläther war in der Lösung nicht mehr nachweisbar.

Die hellbraune, 26,33 %ige Lösung war lagerstabil über 3 Monate. Auch eine aufkonzentrierte 60 %ige Lösung blieb lagerstabil.

Das konzentrierte Produkt kristallisierte nach mehreren Tagen bei 20 °C durch, konnte jedoch durch Eintauchen in ein ca. 50 °C heißes Bad wieder leicht verflüssigt werden.

Beispiele 3-9

3. BuEtMg (komplexiert mit 1/37 Mol B $u_3Al$) mit $Mg(OsBu)_2$ Viskosität: 80 cSt bei 20 °C, $d^{20}$: 0,93 g $cm^{-3}$.

4. $nHex_2Mg$ (komplexiert mit 1/37 Mol $Et_3Al$) mit $Mg(OEt)_2$, Elementaranalyse: C = 63,4 % (theor. 62,22 %); H = 12,04 % (11,67 %); Mg = 14,97 % (15,75 %).

5. $nOC_2Mg$ (komplexiert mit 1/20 Mol THF) mit $Mg(OEt)_2$ Elementaranalyse: C = 66,5 % (theor. 65,83 %); H = 12,59 % (12,07 %); Mg = 13,0 (13,33 %).

6. BuOcMg (komplexiert mit 1/40 Mol $Bu_3Al$) mit $Mg(OiPr)_2$ + $Mg(OEt)_2$(1 : 1) Elementaranalyse: Mg = 14,67 % (theor. 15,07 %); nach Zersetzung ergab sich ein Molverhältnis von i-Propanol zu Äthanol von 1 : 0,923 (gaschromatographisch, Zuspritzmethode).

7. $Bu_{1,5}Oc_{0,5}Mg$ (komplexiert mit 1/45 Mol $Al(OiPr)_3$ mit $Mg(OEt)_2$ im Molverhältnis 2 : 1, Elementaranalyse: C = 64,54 % (theor. 64,44 %); Mg = 15,97 % (16,31 %).

8. $Ph_2Mg$ (komplexiert mit 1/25 Mol $Et_3Al$) mit $Mg(OtBu)_2$, Elementaranalyse: Mg = 13,75 % (theor. 13,94 %); die Integration des NMR-Spektrums erbrachte ein Verhältnis der Phenyl- zu t-Butylprotonen von 5 : 8,6 (theor. 5 : 9).

9. BusBuMg (unkomplexiert) in 8 %iger Lösung in iso-Octan mit $Mg(OiPr)_2$, Viskosität des Konzentrats: 67 cSt bei 23 °C, $d^{20}$: 0,91 g $cm^{-3}$.

Die Konzentrate aus Beispiel 4 und 5 waren wachsartig bzw. hochviskos ölig; alle übrigen leicht bewegliche Öle.

Beispiel 10

a) Herstellung von $Bu_{0,75}Oc_{0,25}Mg(OEt)_{0,8}(OiPr)_{0,2}$

217,4 g einer 15,3 %igen Lösung von $Bu_{1,5}Oc_{0,5}Mg$ (0,20 Mol; komplexiert mit 1/37 Mol pro Mol $R_2Mg$ an Al-isopropylat) in Toluol wurden mit 18,28 g Magnesiumäthylat (0,16 Mol) und 5,7 g Magnesiumdi-isopropylat (0,04 Mol) versetzt und 1 Stunde auf Siedetemperatur gehalten. Es löste sich alles auf.

Nach dem Abziehen des Lösungsmittels hinterblieb ein Öl, das auch nach 6 Wochen Lagerung bei ca. 15 °C keine Neigung zur Kristallisation zeigte.

Nach Zersetzung mit verdünnter Salzsäure ergab sich ein Molverhältnis von i-Propanol zu Äthanol von 1 : 3,99 (gaschromatographisch, Zuspritzmethode).

b) Löslichkeiten

$Bu_{0,75}Oc_{0,25}Mg(OEt)_{0,8}(OiPr)_{0,2}$ ist in allen Verhältnissen mischbar mit Hexan, Nonan, Toluol und Diäthyläther.

$Bu_{0,75}Oc_{0,25}Mg(OEt)$ ist in der Wärme vollständig mischbar in allen Verhältnissen mit Hexan, Nonan, Toluol und Diäthyläther. Nach einigen Tagen Standzeit kristallisieren Lösungen, die mehr als 60 %ig sind, in Hexan und Nonan vollständig durch, 60 %ige und niedriger-%ige Lösungen sind lagerstabil. Bei Toluol liegt diese Grenze bei ca. 70 %. Aus Diäthyläther kristallisiert auch aus 90 %igen Lösungen nichts.

$Bu_{0,5}s\text{-}Bu_{0,5}Mg(OiPr)$ ist in den obengenannten Lösungsmitteln in allen Verhältnissen vollständig mischbar.

PhMg(OtBu) ist in den genannten Lösungsmitteln in der Hitze klar gelöst (80 %ig); in Hexan und

Nonan trüben sich die Lösungen beim mehrtägigen Stehen bei ca. 20 °C. 50 %ige Lösungen in Hexan und Nonan bleiben klar.

Vergleichsbeispiel

In eine Lösung von Diäthylmagnesium in Diäthyläther (Gehalt : 40,75 mMol in 35 g Lösung) wurden unter Kühlung auf 0 °C 6,04 g t-Butylalkohol (81,5 mMol) eingetropft. Nach Erwärmen auf Raumtemperatur (ca. 25 °C) wurde 1/2 h nachgerührt und erneut 35 g ätherische Diäthylmagnesiumlösung zugefügt. Es wurde 6 h unter Rückfluß (36 °C) rühren gelassen. Der Niederschlag wurde danach abfiltriert und als $Mg(OtBu)_2$ identifiziert. Er wog 6,89 g. In der ersten Stufe der Umsetzung konnten 6,94 g $Mg(OtBu)_2$ entstehen ; d. h., die Umsetzung zu Äthylmagnesium-t-butylat hatte nicht stattgefunden.

Ein Produkt, das auf erfindungsgemäße Weise dargestellt wurde, war in Äther klar löslich.

Folgende Abkürzungen wurden verwendet :

Et = Äthyl, Pr = Propyl, Bu = Butyl, Oc = Octyl, s = sekundär, t = tertiär, i = iso, THF = Tetrahydrofuran, X = Halogenrest.

**Ansprüche**

1. Verfahren zur Herstellung von Organomagnesiumalkoxiden der Formel

$$R_a^1R_b^2\ Mg(OR^3)_c(OR^4)_d \quad (I)$$

in der $R^1$, $R^2$, $R^3$ und $R^4$ gleiche oder verschiedene Alkylreste bedeuten und $R^1$, $R^2$ unabhängig voneinander auch einen Aryl- oder Aralkylrest bedeuten können, mit der Maßgabe, daß $R^3$ und $R^4$ nicht gleichzeitig Methyl sein dürfen, wobei (a und b) sowie (c und d) gleich 1 ist und wobei a, b, c und d ganzzahlige und gebrochene Werte annehmen können, dadurch gekennzeichnet, daß man in Kohlenwasserstoffen lösliche Dialkylmagnesiumverbindungen der Formel

$$(R_a^1R_b^2)_2\ Mg \quad (II)$$

mit Verbindungen der Formel

$$Mg[(OR^3)_c(OR^4)_d]_2 \quad (III)$$

bei Temperaturen von 50° bis 160 °C umsetzt.

2. Verfahren zur Herstellung von Organomagnesiumalkoxiden gemäß Anspruch 1, dadurch gekennzeichnet, daß man die Umsetzung bei 80° bis 120 °C durchführt.

3. Verbindungen der allgemeinen Formel

$$R_a^1R_b^2\ Mg(OR^3)_c(OR^4)_d \quad (I)$$

in der $R^1$ Butyl und $R^2$ Octyl bedeutet und $R^3$, $R^4$, a, b, c, d die in Anspruch 1 genannte Bedeutung haben, erhältlich nach dem Verfahren gemäß Anspruch 1.

4. Verbindungen gemäß Anspruch 3 mit einem Butyl-Octylverhältnis von 3 : 1.

5. Verbindungen gemäß den Ansprüchen 3 und 4, wobei $R^3$ und $R^4$ Äthyl und/oder i-Propyl bedeuten.

6. $R^1_{0,75}R^2_{0,25}Mg(OR^3)_{0,8}(OR^4)_{0,2}$

wobei $R^1$ Butyl, $R^2$ Octyl, $R^3$ Äthyl und $R^4$ i-Propyl bedeuten.

7. Stabile Lösungen der Verbindungen gemäß den Ansprüchen 3 bis 6 in inerten Kohlenwasserstoffen.

**Claims**

1. Process for the preparation of organomagnesium alkoxides of the formula

$$R_a^1R_b^2\ Mg(OR^3)_c(OR^4)_d \quad (I)$$

in which $R^1$, $R^2$, $R^3$ and $R^4$ represent the same or different alkyl radicals and $R^1$ and $R^2$, independently of one another, may also represent an aryl radical or an aralkyl radical, with the proviso that $R^3$ and $R^4$ may not simultaneously be methyl, (a and b) and (c and d) being equal to 1 and it being possible for a, b, c and d to assume the values of integers and fractions, characterised in that dialkylmagnesium compounds of the formula

$$(R_a^1R_b^2)_2\ Mg \quad (II)$$

which are soluble in hydrocarbons, are reacted at temperatures of from 50° to 160 °C with compounds of the formula

$$Mg[(OR^3)_c(OR^4)_d]_2 \qquad (III)$$

2. Process for the preparation of organomagnesium alkoxides according to claim 1, characterised in that the reaction is carried out at from 80° to 120 °C.

3. Compounds of the general formula

$$R_a^1R_b^2\ Mg(OR^3)_c(OR^4)_d \qquad (I)$$

in which $R^1$ represents butyl and $R^2$ represents octyl and $R^3$, $R^4$, a, b, c and d have the meanings given in claim 1, and which are obtainable by the process according to claim 1.

4. Compounds according to claim 3, having a ratio of butyl to octyl of 3 : 1.

5. Compounds according to claims 3 and 4, in which $R^3$ and $R^4$ represent ethyl and/or i-propyl.

6. $R^1_{0.75}R^2_{0.25}Mg(OR^3)_{0.8}(OR^4)_{0.2}$
in which $R^1$ represents butyl, $R^2$ represents octyl, $R^3$ represents ethyl and $R^4$ represents i-propyl.

7. Stable solutions of the compounds according to claims 3 to 6 in inert hydrocarbons.

**Revendications**

1. Procédé de préparation d'alcoolates d'organo-magnésiums répondant à la formule

$$R_a^1R_b^2\ Mg(OR^3)_c(OR^4)_d \qquad (I)$$

dans laquelle $R^1$, $R^2$, $R^3$ et $R^4$ représentent chacun, indépendamment les uns des autres, un radical alkyle et $R^1$ et $R^2$ peuvent en outre représenter chacun, indépendamment l'un de l'autre, un radical aryle ou aralkyle, avec la condition que $R^3$ et $R^4$ ne représentent pas chacun en même temps un radical méthyle, les sommes (a + b) et (c + d) sont égales chacunes à 1 et a, b, c et d peuvent prendre des valeurs entières ou fractionnaires, procédé caractérisé en ce qu'on fait réagir des composés dialkylmagnésiens de formule

$$[R_a^1R_b^2]_2\ Mg \qquad (II)$$

solubles dans des hydrocarbures, avec des composés de formule

$$Mg\,[(OR^3)_c(OR^4)_d]_2 \qquad (III)$$

à des températures de 50 à 160 °C.

2. Procédé de préparation d'alcoolates d'organo-magnésiums selon la revendication 1, procédé caractérisé en ce qu'on effectue la réaction à une température comprise entre 80 et 120 °C.

3. Composés répondant à la formule générale

$$R_a^1R_b^2\ Mg(OR^3)_c(OR^4)_d \qquad (I)$$

dans laquelle $R^1$ représente un radical butyle, $R^2$ représente un radical octyle, et $R^3$, $R^4$, a, b, c et d ont les significations données à la revendication 1, qui peuvent être préparés par le procédé de la revendication 1.

4. Composés selon la revendication 3, dans lesquels le rapport butyle/octyle est égal à 3 : 1.

5. Composés selon l'une des revendications 3 et 4, dans lesquels $R^3$ et $R^4$ représentent un radical éthyle et/ou un radical isopropyle.

6. Composé répondant à la formule

$$R_{0,75}^1R_{0,25}^2\ Mg(OR^3)_{0,8}(OR^4)_{0,2}$$

dans laquelle $R^1$ représente un radical butyle, $R^2$ un radical octyle, $R^3$ un radical éthyle et $R^4$ un radical isopropyle.

7. Solutions stables des composés selon l'une quelconque des revendications 3 à 6 dans des hydrocarbures inertes.